# EUROPEAN PATENT APPLICATION

(11) **EP 1 813 841 A1**
(43) Date of publication of application: **01.08.2007**
(21) Application number: 07001469.1
(22) Date of filing: 24.01.2007
(51) Int. Cl.: F16J 15/06

(54) **Sealing structure**

(30) Priority: 25.01.2006 JP 2006016121
(71) Applicant: YAMAHA HATSUDOKI KABUSHIKI KAISHA, Iwata-shi, Shizuoka-ken 438-8501 (JP)
(72) Inventor: Ishida, Yousuke, Iwata-shi Shizuoka-ken 438-8501 (JP); Oishi, Akifumi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a sealing structure for sealing components of a belt type continuously variable transmission comprising a sealing member and sealing groove (69), the sealing member (68) being at least partially provided with a flat cross section, wherein a longitudinal length (SL) of the flat cross section of the sealing member (68) is smaller than a groove depth (L) of the sealing groove (69), such that in a state before the components to be sealed are joined together, the whole sealing member (68) is inserted into the sealing groove (69).

## Description

The present invention relates to a sealing structure and, in particular to a sealing structure having a sealing member, which seals a belt chamber of a belt type continuously variable transmission, and a belt type continuously variable transmission.

Conventionally, a belt type continuously variable transmission is used in, for example, motorcycles, etc. (see, for example, Patent Document 1). A belt type continuously variable transmission comprises a primary sheave, a secondary sheave, and a transmission belt trained around the primary sheave and the secondary sheave. Also, a belt type continuously variable transmission comprises at least two casing members assembled together by bolts, or the like, and a belt chamber is compartmented and formed in the casing members. The primary sheave, the secondary sheave, and the transmission belt are accommodated in the belt chamber.

By the way, when water and dust enter the belt chamber, there is a fear that the transmission belt slips and the transmission belt is shortened in life. Therefore, there is a need of interposing a sealing member between the casing members in assembly.

A sealing member having a solid, circular-shaped cross section is known as a typical sealing member. Since a sealing member having a solid, circular-shaped cross section is large in width, however, a groove (sealing groove), into which the sealing member is inserted, must be made large in width. Therefore, there is caused a problem that a sealed portion of the casing member becomes large.

On the other hand, there is proposed a sealing member having a substantially T-shaped cross section (see, for example, Patent Document 2). A sealing member disclosed in Patent Document 2 comprises an insertion portion inserted into a sealing groove and an opposing portion opposed to a joined surface (a surface joined to another casing member) of casing members. The opposing portion is provided on one end side of the insertion portion to be larger in width than the insertion portion.
Patent Document 1: JP-A1-2003-085278 .
Patent Document 2: JP-A-9-240539 (Fig. 8)

With the sealing member having a substantially T-shaped cross section, however, the insertion portion inserted into the sealing groove is small in width but the opposing portion is still large in width. Therefore, the sealed portion of the casing member is not necessarily made small in total width.

Also, the inventors of the present application have proposed a construction in a V-belt type continuously variable transmission, in which a part of one of casing members is inserted into a sealing groove on the other of the casing members. In such construction, the whole sealing member is inserted into the sealing groove. Accordingly, it is not possible to use a sealing member having a substantially T-shaped cross section.

Also, with the sealing member disclosed in Patent Document 2, after the sealing member contracts to some extent when the casing members are assembled together, the opposing portion of the sealing member comes into contact with the joined surface of the casing member and the insertion portion is not deformed much. Therefore, buckling of the sealing member is hard to generate. However, a sealing member not having a substantially T-shaped cross section is liable to buckle when it is small in width. When a sealing member is subjected to buckling, however, there is produced a factor responsible for degradation in sealing quality.

The invention has been thought of in view of such matter and has its one object to provide a novel sealing member, by which a sealed portion of a casing member can be made small in width and which is hard to buckle.

This objective is solved in an inventive manner by a sealing structure for sealing components of a belt type continuously variable transmission comprising a sealing member and sealing groove, the sealing member being at least partially provided with a flat cross section, wherein a longitudinal length of the flat cross section of the sealing member is smaller than a groove depth of the sealing groove, such that in a state before the components to be sealed are joined together, the whole sealing member is inserted into the sealing groove.

Preferably, longitudinal end faces of the flat sealing member are formed to be tapered.

Further, preferably at least one longitudinal side face of the sealing member is provided with a recess and/or with two or more projections. Therein, the sealing member may be string-shaped.

Still further, preferably in a state in which the components to be sealed have been joined together, the sealing member substantially completely fills in a space of the sealing groove remaining between the joined components.

According to a preferred embodiment the sealing structure comprises the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on both longitudinal sides thereof with recesses.

According to another preferred embodiment, the sealing structure comprises the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on one longitudinal side thereof with two or more projections, and formed on the other longitudinal side thereof with one or more projections.

According to yet another preferred embodiment, the sealing structure comprises the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on one longitudinal side thereof with first and second projections, respectively, which are positioned toward one end face and the other end face thereof relative to a middle in the longitudinal direction, and is formed on the other longitudinal side thereof with third and fourth projections, respectively, which are positioned on one end face and the other end face thereof relative to the middle in the longitudinal direction.

According to still another preferred embodiment, the sealing structure comprises the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on one longitudinal side thereof with first and second projections, respectively, which are positioned toward one end face and the other end face thereof relative to a middle in the longitudinal direction, and is formed on the other longitudinal side thereof with a third projection.

Preferably, in the cross section, the first projection and the third projection are equal to each other in positioning in the longitudinal direction, and the second projection and the fourth projection are equal to each other in positioning in the longitudinal direction.

Further, preferably in the cross section, the third projection is positioned to be intermediate on the other side thereof in the longitudinal direction.

Still further, preferably the sealing member being formed therein with a cavity.

Yet further still, preferably the sealing member being formed to be endless.

There is further provided a belt type continuously variable transmission comprising a sealing structure with a sealing member according to one of the above embodiments, and first and second casing members joined to each other to constitute at least a part of a belt chamber, and wherein the first and second casing members are formed with the sealing groove, and in a state, in which the first and second casing members are joined together, the whole sealing member is put in a state of being inserted into the sealing groove.

In the following, the present invention is explained in greater detail with respect to several embodiments thereof in conjunction with the accompanying drawings, wherein:
- Fig. 1: is a right side view showing a motorcycle,
- Fig. 2: is a horizontal, cross sectional view showing a vehicle body frame, a power unit, etc,
- Fig. 3: is a right side view showing the power unit,
- Fig. 4: is a left side view showing the power unit,
- Fig. 5: is a cross sectional view showing a state, in which the power unit is mounted,
- Fig. 6: is a cross sectional view showing an internal construction of the power unit,
- Fig. 7: is a cross sectional view showing a part of the internal construction of the power unit,
- Fig. 8: is an exploded, perspective view showing a second case block and an inner casing,
- Fig. 9: is a cross sectional view showing the second case block and an interior of a transmission case,
- Figs. 10(a) to 10(c): are cross sectional views showing a sealed portion of the transmission case according to an embodiment,
- Figs. 11(a) to 11(c): are cross sectional views showing a sealed portion in a comparative example,
- Fig. 12: is a transverse, cross sectional view showing a sealing member according to an embodiment,
- Fig. 13: is a transverse, cross sectional view showing a sealing member according to a modification,
- Fig. 14: is a transverse, cross sectional view showing a sealing member according to a modification,
- Fig. 15: is a transverse, cross sectional view showing a sealing member according to a modification,
- Fig. 16: is a transverse, cross sectional view showing a sealing member according to a modification,
- Fig. 17: is a transverse, cross sectional view showing a sealing member according to a modification,
- Fig. 18: is a transverse, cross sectional view showing a sealing member according to a modification, and
- Fig. 19: is a transverse, cross sectional view showing a sealing member according to a modification.

### Description of Reference Numerals and Signs:

28: power unit
30: belt type continuously variable transmission
53: transmission case
53a: inner casing (first casing member)
53b: outer casing (second casing member)
67: belt chamber
68: sealing member
69: sealing groove
90: recess
91a: first projection
91b: second projection
91c: third projection
91d: fourth projection
97: cavity

An embodiment will be described in detail with reference to the drawings.

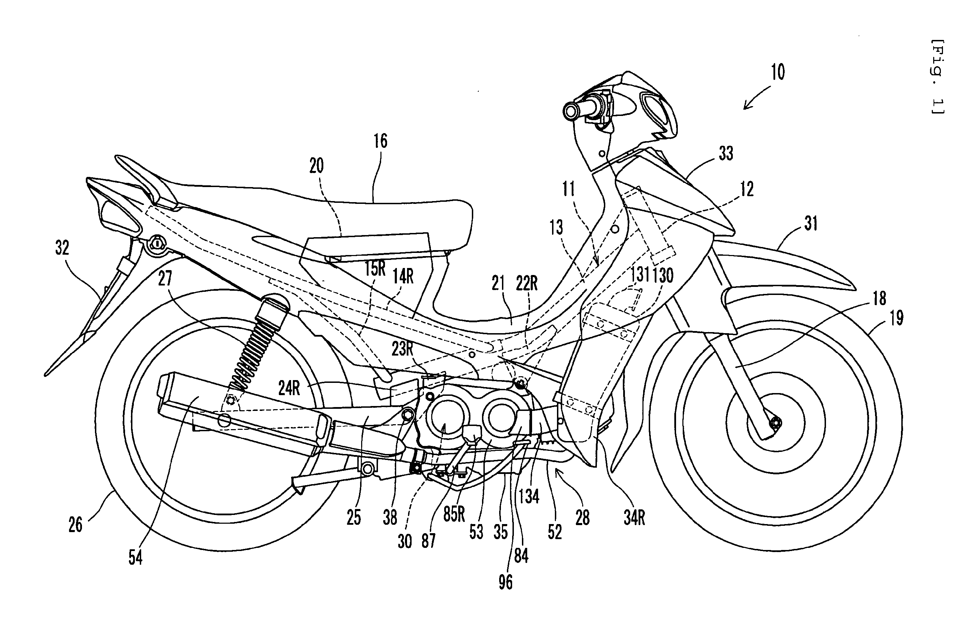

As shown in Fig. 1, a belt type continuously variable transmission 30 according to the embodiment is mounted on a motorcycle 10, which is a kind of a saddle-ride type vehicle.

The motorcycle 10 comprises a vehicle body frame 11 and a seat 16, on which a crew is seated. In the following descriptions, front and rear, and left and right directions indicate directions as viewed from a crew seated on the seat 16.

The vehicle body frame 11 comprises a steering head pipe 12, a single main frame 13 extending rearward and obliquely downward from the steering head pipe 12, left and right seat rails 14L, 14R extending rearward and obliquely upward from an intermediate portion of the main frame 13, and left and right seat pillar tubes 15L, 15R connected to a -rear end of the main frame 13 and intermediate portions of the seat rails 14L, 14R. Upper and left and right sides of the vehicle body frame 11 are covered by a vehicle body cover 21.

A front wheel 19 is supported on the steering head pipe 12 with a front fork 18 therebetween. A fuel tank 20 and a seat 16 are supported above the seat rails 14L, 14R.

A pair of first left and right engine brackets 22L, 22R projecting downward are provided on the intermediate portion of the main frame 13. A pair of second left and right engine brackets 23L, 23R and a pair of left and right rear arm brackets 24L, 24R, respectively, are provided on the rear end of the main frame 13.

The rear arm brackets 24L, 24R project downward from the rear end of the main frame 13. A pivot 38 is provided on the rear arm brackets 24L, 24R and a front end of a rear arm 25 is supported on the pivot 38 to be able to swing. A rear wheel 26 is supported on a rear end of the rear arm 25. A rear half of the rear arm 25 is suspended through a cushion unit 27 from the vehicle body frame 11.

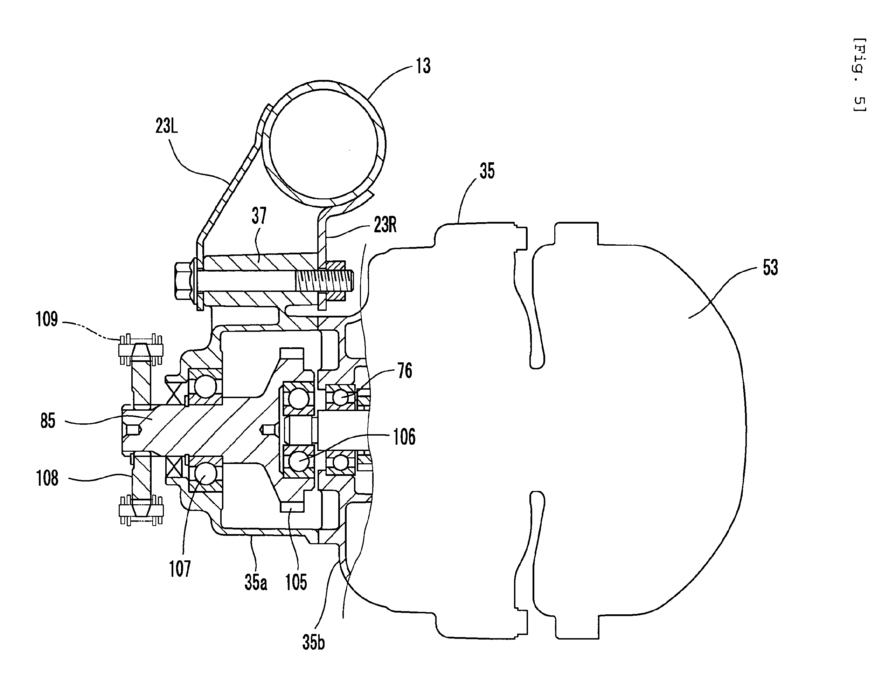

As shown in Fig. 5, the second engine brackets 23L, 23R project downward from the rear end of the main frame 13. The second left and right engine brackets 23L, 23R face each other with a spacing therebetween in a vehicle width direction.

As shown in Fig. 1, the motorcycle 10 comprises a front fender 31, which covers an upper portion and a rear portion of the front wheel 19, and a rear fender 32, which covers a rear, obliquely upper side of the rear wheel 26.

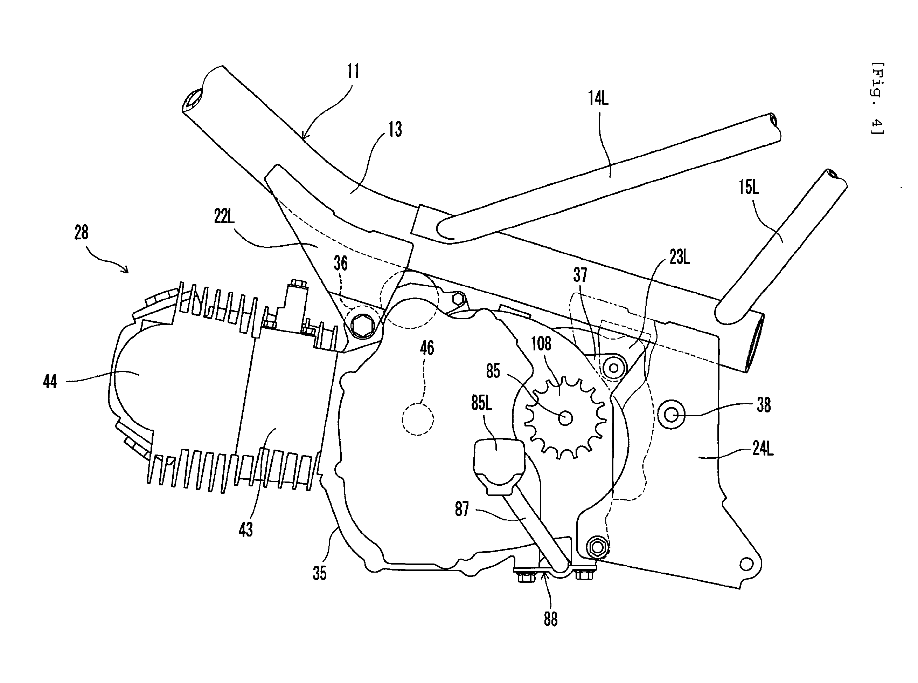

A power unit 28 is supported on the vehicle body frame 11 to drive the rear wheel 26. Specifically, as shown in Fig. 4, the power unit 28 comprises a crankcase 35, a cylinder 43, and a cylinder head 44. The crankcase 35 comprises first and second engine mounts 36, 37. The first engine mount 36 projects upward from an upper side of a front end of the crankcase 35 to be supported on the first engine brackets 22L, 22R. The second engine mount 37 projects rearward and obliquely upward from an upper side of a rear end of the crankcase 35 to be supported on the second engine brackets 23L, 23R (also, see Fig. 5). Therefore, the crankcase 35 is supported in a state of being suspended from the main frame 13.

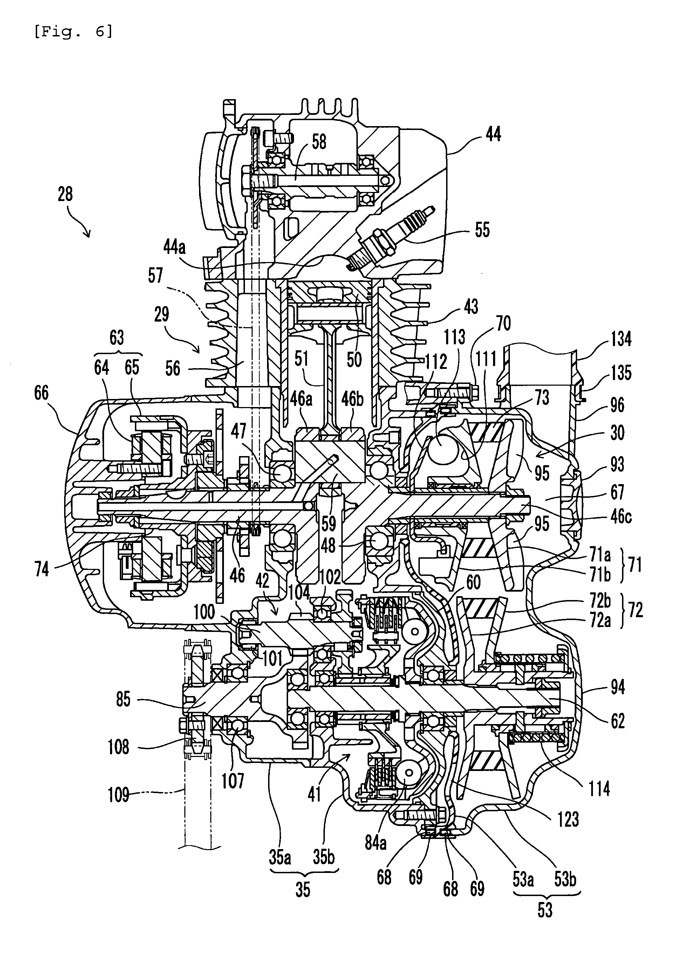

As described later in detail, the power unit 28 comprises an engine 29 and the belt type continuously variable transmission (referred below to as CVT) 30 (see Fig. 6). While the engine 29 is in no way limited in type, the engine 29 comprises a 4-cyle single cylinder engine.

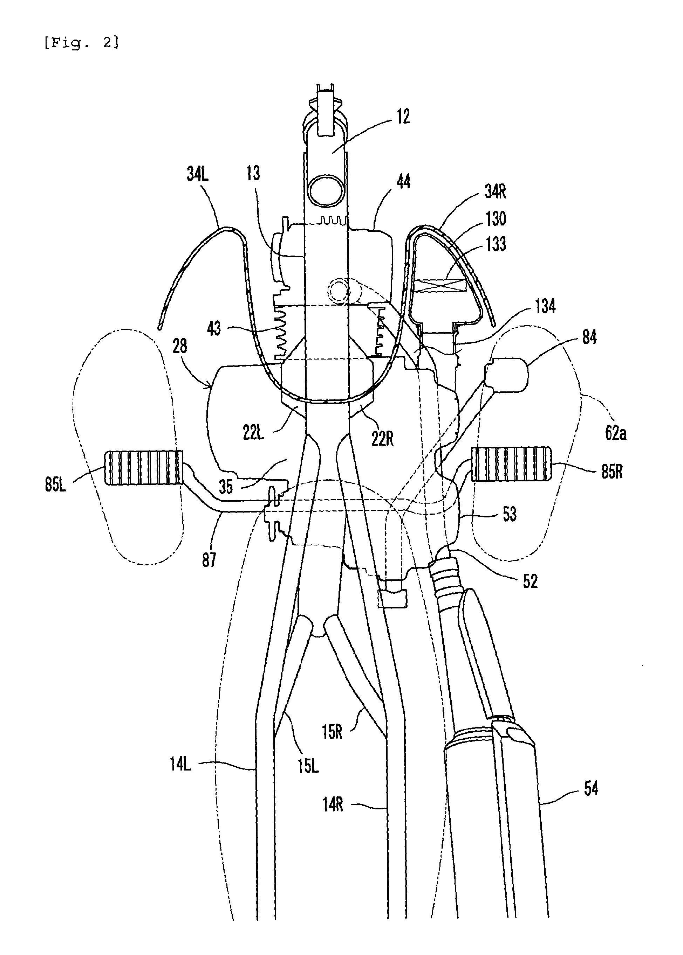

As shown in Fig. 1, the motorcycle 10 comprises a front cowl 33 and left and right leg shields 34L, 34R as well as the vehicle body cover 21. As shown in Figs. 1 and 2, an air chamber 130 is arranged rearwardly of the right leg shield 34R. A suction duct 131, through which an air is taken in, is provided above the air chamber 130. A filter 133 (see Fig. 2) is accommodated in the air chamber 130. An intake duct 134, through which an air in the air chamber 130 is led into a belt chamber 67 (see Fig. 6) in a transmission case 53, is connected to a rear side of a lower portion of the air chamber 130.

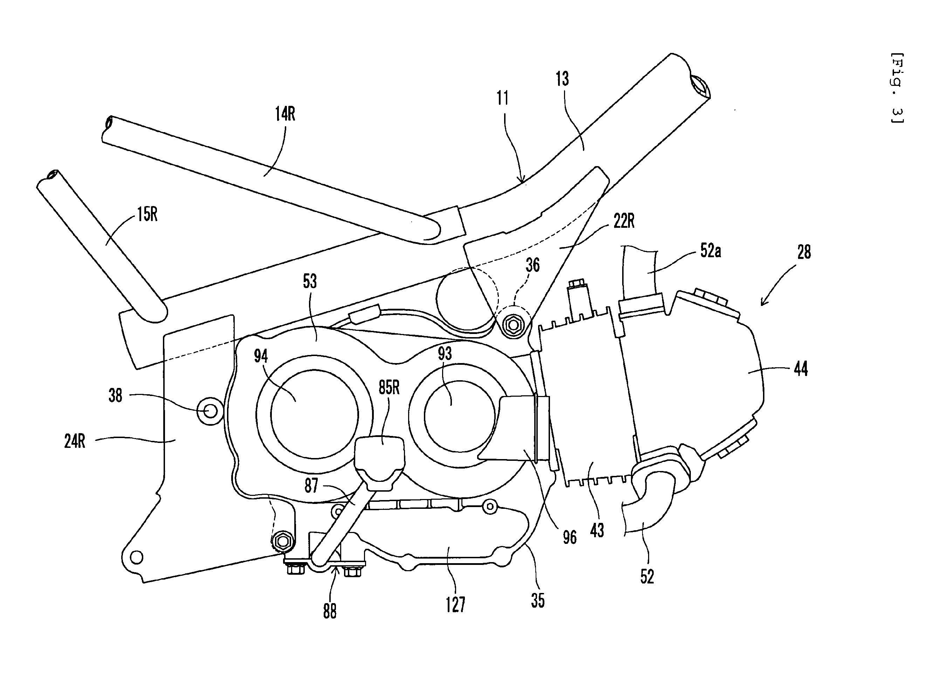

As shown in Fig. 2, foot rests 85L, 85R made of rubber or the like are arranged on the left and the right of the power unit 28. The left and right foot rests 85L, 85R are supported on the crankcase 35 of the power unit 28 through a metallic connecting bar 87 and a mount plate 88 (see Figs. 3 and 4) fixed to the connecting bar 87. As shown in Figs. 1 and 2, a brake pedal 84 is provided forwardly of the right foot rest 85R. In addition, the reference numeral 62a in Fig. 2 denotes a driver's foot.

Subsequently, an explanation will be given to an internal construction of the power unit 28. As shown in Fig. 6, the power unit 28 comprises the engine 29, the CVT 30, a centrifugal clutch 41, and a reduction mechanism 42.

The engine 29 comprises the crankcase 35, the cylinder 43 connected to the crankcase 35, and the cylinder head 44 connected to the cylinder 43. The crankcase 35 comprises two divided case blocks, that is, a first case block 35a positioned on the left, and a second case block 35b positioned on the right. The first case block 35a and the second case block 35b are butted against each other in the vehicle width direction.

A crankshaft 46 is accommodated in the crankcase 35. The crankshaft 46 is extended in the vehicle width direction and arranged to be horizontal. The crankshaft 46 is supported on the first case block 35a with a bearing 47 therebetween and supported on the second case block 35b with a bearing 48 therebetween.

A piston 50 is inserted slidably in the cylinder 43. One end of a connecting rod 51 is connected to the piston 50. A crank pin 59 is provided between a left crank arm 46a and a right crank arm 46b of the crankshaft 46. The other end of the connecting rod 51 is connected to the crank pin 59.

A recess 44a, and an intake port and an exhaust port, which are not shown and communicated to the recess 44a, are formed on the cylinder head 44. An ignition plug 55 is inserted into the recess 44a of the cylinder head 44. As shown in Fig. 3, an intake pipe 52a is connected to the intake port and an exhaust pipe 52 is connected to the exhaust port. As shown in Figs. 1 and 2, the exhaust pipe 52 extends rearward and right obliquely downward from the cylinder head 44 and then passes below the transmission case 53 of the power unit 28 to be extended further rearward and connected to a muffler 54 arranged rightwardly laterally of the rear wheel 26.

As shown in Fig. 6, a cam chain chamber 56 is formed on the left in the cylinder 43 to connect between an interior of the crankcase 35 and an interior of the cylinder head 44. A timing chain 57 is arranged in the cam chain chamber 56. The timing chain 57 is trained around the crankshaft 46 and a cam shaft 58. The cam shaft 58 rotates as the crankshaft 46 rotates, and opens and closes an intake valve and an exhaust valve, which are not shown.

A generator casing 66 is mounted detachably to the left side of a front half of the first case block 35a and accommodates therein a generator 63. The transmission case 53 is mounted to the right side of the second case block 35b and accommodates therein the CVT 30.

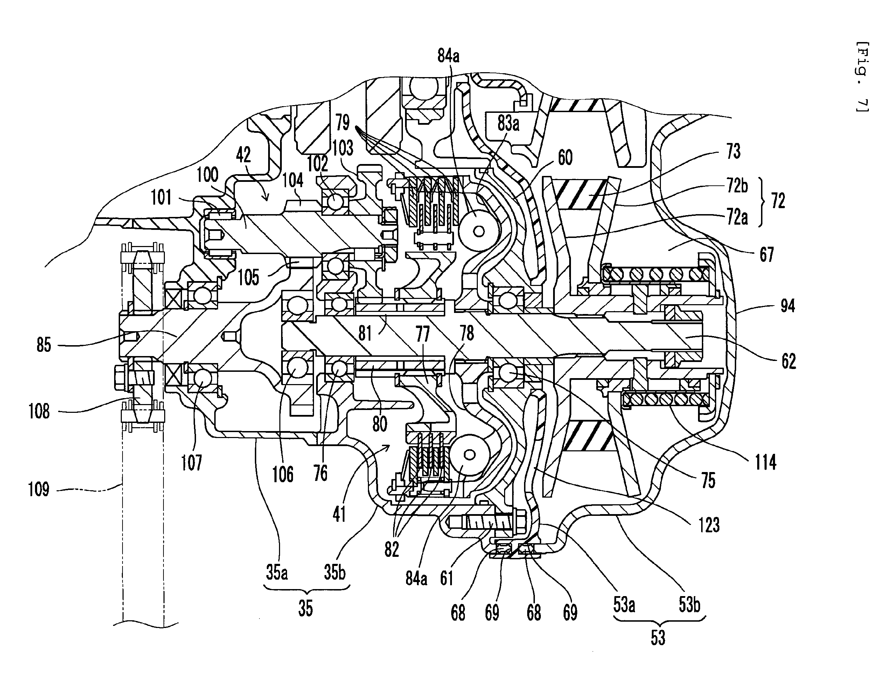

An opening is formed on the right side of a rear half of the second case block 35b, the opening being closed by a clutch cover 60. The clutch cover 60 is fixed detachably to the second case block 35b by a bolt 61 (see Fig. 7).

The transmission case 53 is formed independently of the crankcase 35 and comprises an inner casing 53a, which covers an inside (left) of the CVT 30 in the vehicle width direction, and an outer casing 53b, which covers an outside (right) of the CVT 30 in the vehicle width direction. The inner casing 53a is mounted to the right side of the crankcase 35 and the outer casing 53b is mounted to the right side of the inner casing 53a. A belt chamber 67 is formed in the inner casing 53a and the outer casing 53b to accommodate therein the CVT 30. In addition, the inner casing 53a is formed from a resin material and the outer casing 53b is formed from a metallic material.

As shown in Fig. 6, a right end of the crankshaft 46 extends through the second case block 35b and the inner casing 53a to be extended to the belt chamber 67. A primary sheave 71 of the CVT 30 is fitted onto a right end of the crankshaft 46. Therefore, the primary sheave 71 rotates as the crankshaft 46 rotates. A right portion (strictly, a portion rightwardly of the bearing 48) of the crankshaft 46 forms a primary sheave shaft 46c.

On the other hand, a left end of the crankshaft 46 extends through the first case block 35a to be extended into the generator casing 66. The generator 63 is mounted to the left end of the crankshaft 46. The generator 63 comprises a stator 64 and a rotor 65 opposed to the stator 64. The rotor 65 is fixed to a sleeve 74, which rotates together with the crankshaft 46. The stator 64 is fixed to the generator casing 66.

A secondary sheave shaft 62 is arranged in a rear half of the interior of the crankcase 35 to be made in parallel to the crankshaft 46. As shown in Fig. 7, a right portion of a central portion of the secondary sheave shaft 62 is supported on the clutch cover 60 with a bearing 75 therebetween. A left portion of the secondary sheave shaft 62 is supported on a left end of the second case block 35b with a bearing 76 therebetween. A right end of the secondary sheave shaft 62 extends through the second case block 35b and the clutch cover 60 to be extended to the belt chamber 67. A secondary sheave 72 of the CVT 30 is connected to the right end of the secondary sheave shaft 62.

The CVT 30 comprises the primary sheave 71, the secondary sheave 72, and a V-belt 73 trained around the primary sheave 71 and the secondary sheave 72. As described above, the primary sheave 71 is mounted to the right portion of the crankshaft 46. The secondary sheave 72 is connected to a right portion of the secondary sheave shaft 62.

The primary sheave 71 comprises a stationary sheave half 71a positioned outside in the vehicle width direction, and a moving sheave half 71b positioned inside in the vehicle width direction to be opposed to the stationary sheave half 71a. The stationary sheave half 71a is fixed to a right end of a primary sheave shaft 46c to rotate together with the primary sheave shaft 46c. The moving sheave half 71b is arranged on the left of the stationary sheave half 71a and mounted slidably to the primary sheave shaft 46c. Accordingly, the moving sheave half 71b rotates together with the primary sheave shaft 46c and can slide axially of the primary sheave shaft 46c. A belt groove is formed between the stationary sheave half 71a and the moving sheave half 71b. A cam surface 111 is formed on a left portion of the moving sheave half 71b and a cam plate 112 is arranged on the left of the cam surface 111. A roller weight 113 is arranged between the cam surface 111 of the moving sheave half 71b and the cam plate 112.

A plurality of vanes 95 for blasting are formed on a right portion of the stationary sheave half 71a of the primary sheave 71. The vanes 95 lead an air to the belt chamber 67 from the intake duct 134 and convey an air in the belt chamber 67 to the outside.

The secondary sheave 72 comprises a stationary sheave half 72a positioned inside in the vehicle width direction, and a moving sheave half 72b positioned outside in the vehicle width direction to be opposed to the stationary sheave half 72a. The moving sheave half 72b is mounted to the right end of the secondary sheave shaft 62. The moving sheave half 72b rotates together with the secondary sheave shaft 62 and can slide axially of the secondary sheave shaft 62. A helical compression spring 114 is provided on the right end of the secondary sheave shaft 62 and the moving sheave half 72b is biased leftward by the helical compression spring 114. An axial core of the stationary sheave half 72a defines a cylindrical-shaped slide collar to be spline-fitted onto the secondary sheave shaft 62.

As shown in Fig. 6, the outer casing 53b of the transmission case 53 comprises a first bowl-shaped, bulged portion 93 and a second bowl-shaped, bulged portion 94, which bulge outside (rightward) in the vehicle width direction. The first bulged portion 93 and the second bulged portion 94 are aligned longitudinally. The first bulged portion 93 covers an outside of the primary sheave 71 and the second bulged portion 94 covers an outside of the secondary sheave 72. A connecting pipe 96 made integral with the outer casing 53b is provided forwardly of the first bulged portion 93. The connecting pipe 96 is connected to the intake duct 134. In addition, while the connecting pipe 96 and the intake duct 134 are in no way limited in configuration of connection, the connecting pipe 96 and the intake duct 134 are fixed together by a band 135.

As shown in Fig. 7, a peripheral edge of the inner casing 53a is elongate in the left and right direction and sealing grooves 69 are formed on the left and the right sides thereof. A right peripheral edge of the second case block 35b is inserted into the left sealing groove 69. On the other hand, a peripheral edge of the outer casing 53b is inserted into the right sealing groove 69. In addition, sealing members 68, respectively, are inserted into the sealing grooves 69. The outer casing 53b and the second case block 35b are clamped together in a state, in which the inner casing 53a is interposed therebetween, by a bolt 70 (see Fig. 6).

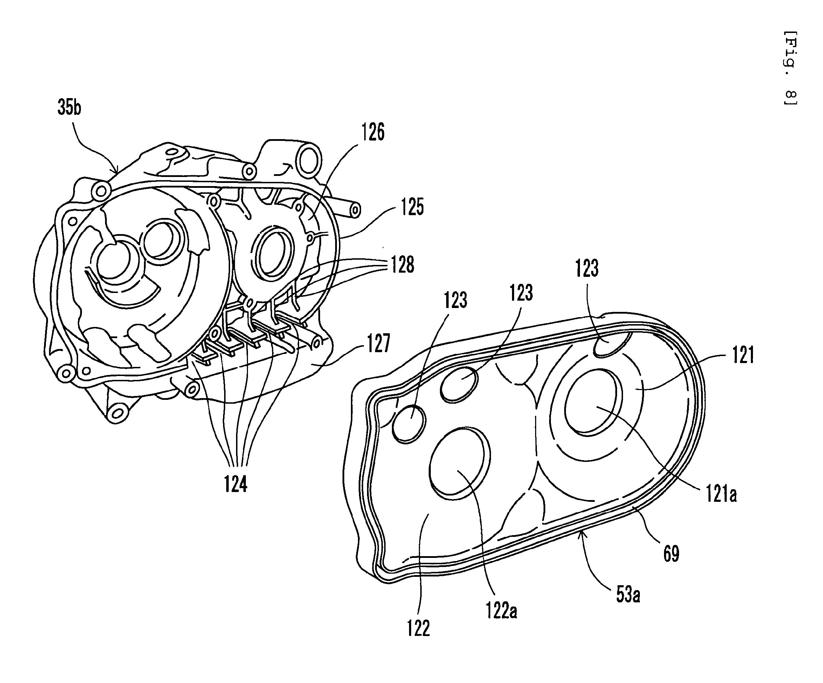

As shown in Fig. 8, a front half 121 of the inner casing 53a is bulged leftward to be bowl-shaped, and a rear half 122 of the inner casing 53a is bulged rightward to be bowl-shaped. A hole 121a is formed on the front half 121 to permit the primary sheave shaft 46c of the CVT 30 to be inserted therethrough. A hole 122a is formed on the rear half 122 to permit the secondary sheave shaft 62 of the CVT 30 to be inserted therethrough. In addition, Fig. 8 does not show the clutch cover 60 (see Fig. 6) interposed between the inner casing 53a and the second case block 35b.

Ventilating holes 123 are provided on the inner casing 53a. According to the embodiment, the ventilating holes 123 are formed to be circular in shape and formed three in number above a vertically intermediate position of the inner casing 53a. However, the ventilating holes 123 are in no way limited in shape, position, number, etc. According to the embodiment, the ventilating holes 123 are provided on the front half 121 and the rear half 122, respectively, of the inner casing 53a.

A plurality of ventilating holes 124 are formed on an underside of a right portion of the second case block 35b. More specifically, the second case block 35b comprises a peripheral edge 125 provided rightwardly upright, the peripheral edge 125 being shaped to be conformed to a shape profile of the transmission case 53. A lower side of the peripheral edge 125 is shaped to be partially slit in a notched manner, that is, in the form of a so-called comb. Therefore, a space 126 compartmented by the second case block 35b and the inner casing 53a is communicated to outside the power unit 28 through the ventilating holes 124. In addition, since the right side of the rear half of the second case block 35b is covered by the clutch cover 60 (see Fig. 6), the space 126 is defined between the clutch cover 60 and the inner casing 53a in the rear half of the second case block 35b.

Reinforcement ribs 128 are provided on the comb-shaped portion of the peripheral edge 125. An oil pan 127 is provided below the ventilating holes 124.

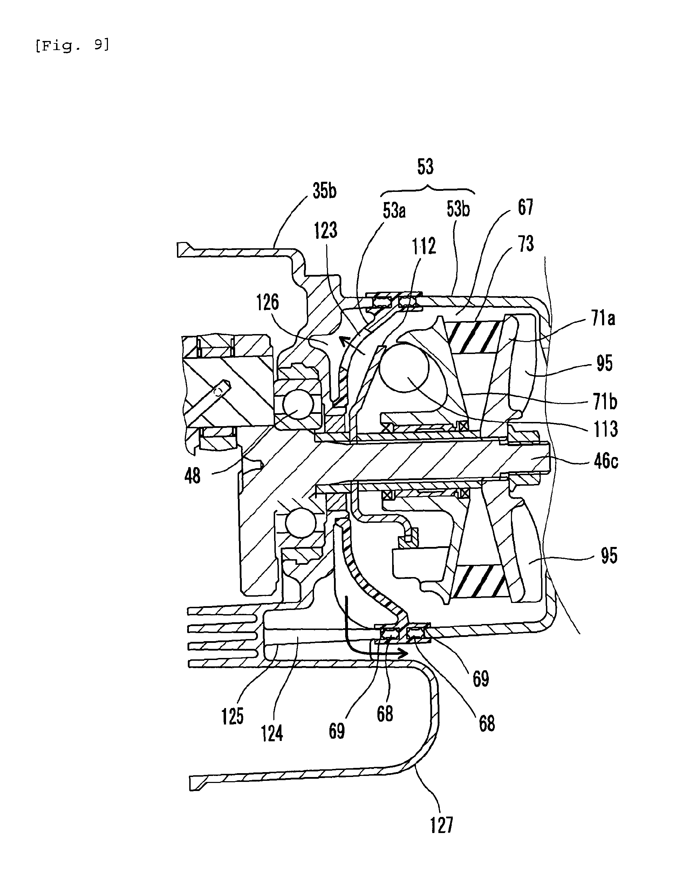

With such construction, an air in the belt chamber 67 is led to the space 126 through the ventilating holes 123 of the inner casing 53a as shown in Fig. 9, and further discharged toward the oil pan 127 through the ventilating holes 124 of the second case block 35b. Consequently, the air is discharged outside the power unit 28.

As shown in Fig. 7, the centrifugal clutch 41 is mounted to the left portion of the secondary sheave shaft 62. The centrifugal clutch 41 is a wet type multiple disc clutch to comprise a substantially cylindrical-shaped clutch housing 78 and a clutch boss 77. The clutch housing 78 is spline-fitted onto the secondary sheave shaft 62 to rotate together with the secondary sheave shaft 62. A plurality of ring-shaped clutch discs 79 are mounted to the clutch housing 78. The clutch discs 79 are aligned at intervals axially of the secondary sheave shaft 62.

A cylindrical-shaped gear 80 is fitted rotatably onto a periphery of the left portion of the secondary sheave shaft 62 with a bearing 81 therebetween. The clutch boss 77 is arranged radially inwardly of the clutch discs 79 and radially outwardly of the gear 80 to mesh with the gear 80. Therefore, the gear 80 rotates together with the clutch boss 77. A plurality of ring-shaped friction plates 82 are mounted radially outwardly of the clutch boss 77. The friction plates 82 are aligned at intervals axially of the secondary sheave shaft 62, the respective friction plates 82 being arranged between adjacent clutch discs 79,79.

A plurality of cam surfaces 83a are formed on the left side of the clutch housing 78. A roller weight 84a is arranged between the cam surfaces 83a and the rightmost clutch disc 79 opposed to the cam surfaces 83a.

The reduction mechanism 42 is interposed between the centrifugal clutch 41 and an output shaft 85. The reduction mechanism 42 comprises a transmission shaft 100 arranged in parallel to the secondary sheave shaft 62 and the output shaft 85. The transmission shaft 100 is supported rotatably on the first case block 35a with a bearing 101 therebetween and supported rotatably on the second case block 35b with a bearing 102 therebetween. A first speed change gear 103 is provided on a right end of the transmission shaft 100 to mesh with the gear 80.

A second speed change gear 104 having a smaller diameter than that of the first speed change gear 103 is provided centrally of the transmission shaft 100. A third speed change gear 105 is formed on an outer periphery of a right end of the output shaft 85 to mesh with the second speed change gear 104. An inner periphery of the right end of the output shaft 85 is supported on a left end of the secondary sheave shaft 62 with a bearing 106 therebetween. Accordingly, the output shaft 85 is supported rotatably on the secondary sheave shaft 62 with the bearing 106 therebetween to be arranged on the same straight line as that of the secondary sheave shaft 62. Also, a central portion of the output shaft 85 is supported rotatably on a left end of the first case block 35a with a bearing 107 therebetween.

With such construction, the clutch boss 77 and the output shaft 85 are connected to each other with the gear 80, the first speed change gear 103, the transmission shaft 100, the second speed change gear 104, and the third speed change gear 105 therebetween. Therefore, the output shaft 85 rotates as the clutch boss 77 rotates.

A left end of the output shaft 85 extends through the first case block 35a to project outside the crankcase 35. A drive sprocket 108 is fixed to the left end of the output shaft 85. A chain 109 as a power transmission mechanism is trained around the drive sprocket 108 to transmit a drive force of the output shaft 85 to the rear wheel 26.

The construction of the motorcycle 10 is described above. Subsequently, a detailed explanation will be given to a sealing construction of the belt chamber 67. In addition, while an explanation will be given below to a sealing construction between the inner casing 53a and the outer casing 53b of the transmission case 53, a similar sealing construction provides sealing between the second case block 35b of the crankcase,35 and the inner casing 53a. Only the sealing construction between the inner casing 53a and the outer casing 53b will be described below and an explanation for the sealing construction between the second case block 35b and the inner casing 53a is considered to be redundant.

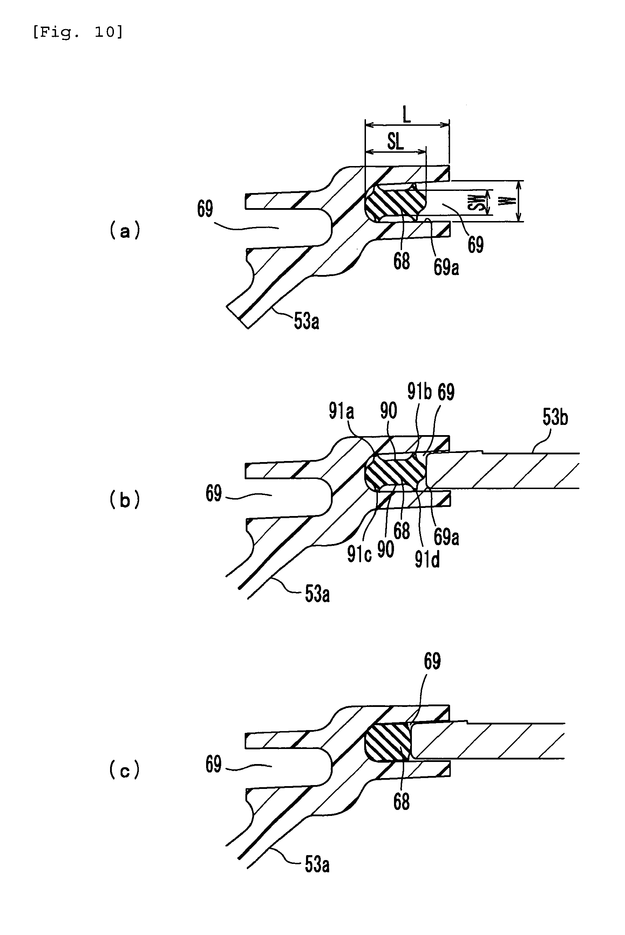

As shown in Fig. 10(a), the sealing grooves 69 on the inner casing 53a are elongate in a depth direction (a left and right direction in the figure) and a groove width W thereof is shorter than a groove depth L. In addition, the groove width W may be constant or not. For example, the groove width W may be decreased as it goes toward the interior (the left in Fig. 10(a)) of the sealing groove 69. In this manner, since the groove width W of the sealing grooves 69 is small in the embodiment, a sealed portion (a periphery of the sealing groove 69) of the inner casing 53a is small in width.

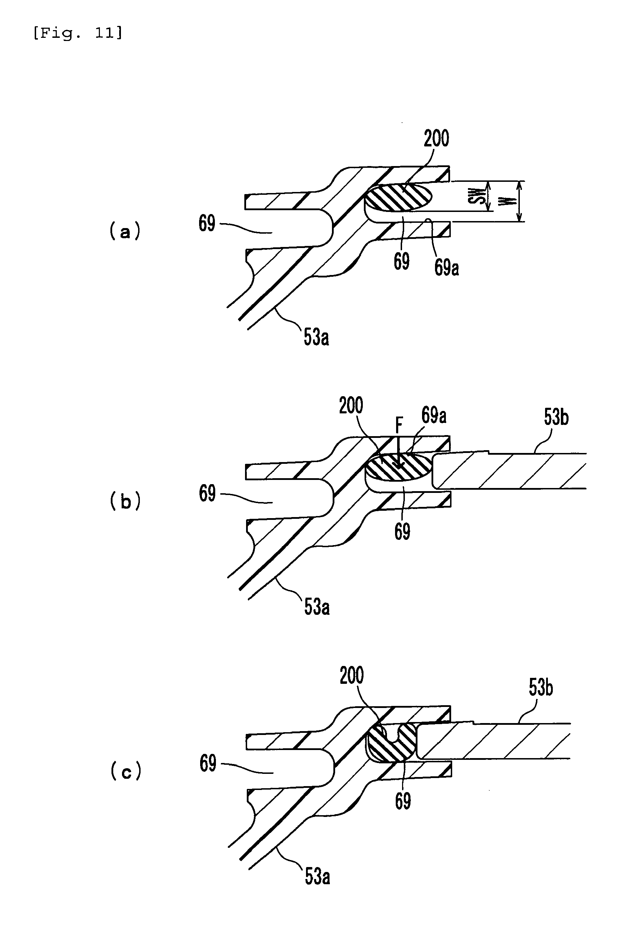

By the way, in the case where the sealing grooves 69 are small in groove width W and large in groove depth L, a sealing member suited to the sealing grooves 69 is preferably flat in cross sectional shape. Also, in order to get a high sealing surface pressure, both ends of a cross section of a sealing member is preferably tapered in shape. As shown in Figs. 11(a) to 11(c), however, the use of only a sealing member 200 being substantially elliptical in cross sectional shape causes a fear that when a peripheral edge of the outer casing 53b is inserted into the sealing groove 69 of the inner casing 53a, the sealing member 200 buckles.

That is, when the inner casing 53a and the outer casing 53b are joined together, the sealing members 200 are subjected to a compression load in a longitudinal direction, so that they expands in a width direction. Therefore, as shown in Fig. 11(a), a width SW of the sealing members 200 must be beforehand made smaller than the groove width W. When the width SW of the sealing members 200 is smaller than the groove width W, however, the sealing members 200 incline, or clearances are produced between the sealing members 200 and sides 69a of the sealing grooves 69 when the sealing members 200 are inserted into the sealing grooves 69.

When the sealing members 200 incline, or clearances are produced between the sealing members 200 and the sides 69a of the sealing grooves 69, however, the sealing members 200 are liable to be subjected to side pressure F from one sides 69a of the sealing grooves 69 as shown in Fig. 11(b) when the sealing members 200 are subjected to a compression load in the longitudinal direction. That is, the sealing members 200 become liable to be subjected to one-sided forces. Consequently, as shown in Fig. 11(c), the sealing members 200 easily buckle in the sealing grooves 69. However, when the sealing members 200 buckle, there is a fear that degradation in sealing quality is incurred.

Hereupon, the shape of the sealing members is contrived according to the embodiment. An explanation will be given below to a sealing member 68 according to the embodiment.

The sealing member 68 is a string-shaped sealing member formed in an endless manner in the embodiment. According to the embodiment, the sealing member 68 is made of rubber. However, a material for the sealing member 68 is not limited to rubber. As shown in Fig. 8, the sealing grooves 69 are formed along an outer periphery of the inner casing 53a. The sealing member 68 according to the embodiment is inserted into the sealing groove 69 to be arranged circumferentially along the outer periphery of the inner casing 53a.

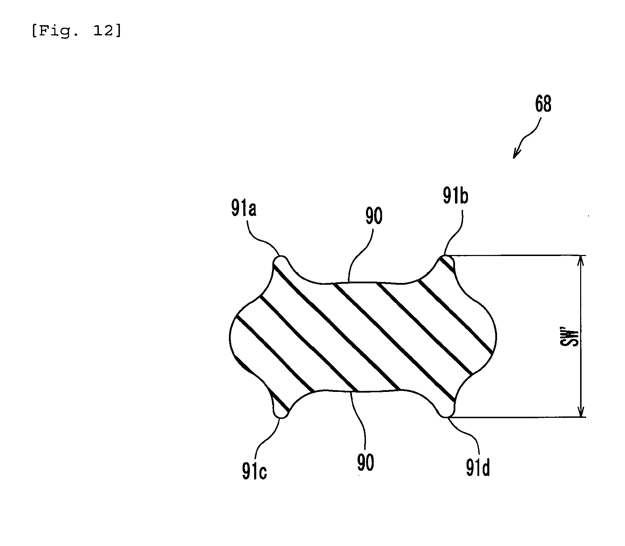

As shown in Fig. 12, the sealing member 68 is formed to be flat in cross sectional shape and both one end side and the other end side thereof in a longitudinal direction (a left and right direction in Fig. 12) are formed to be tapered. Also, recesses 90 are formed on both sides (upper and lower sides in Fig. 12), along a longitudinal direction, of a cross section of the sealing member 68. In addition, "both sides along a longitudinal direction" means sides extending substantially in a longitudinal direction and does not limitedly mean that both sides are in parallel to a longitudinal direction. Therefore, both sides may be in parallel to a longitudinal direction or not.

On the other hand, in a different view, the sealing member 68 according to the embodiment is formed on both sides, respectively, along a longitudinal direction of its cross section with projections. Specifically, a first projection 91a and a second projection 91b, which are positioned on one side and the other side of a middle in the longitudinal direction, are formed on one side along the longitudinal direction, and a third projection 91c and a fourth projection 91d, which are positioned on one side and the other side of the middle in the longitudinal direction, are formed on the other side along the longitudinal direction.

Further, according to the embodiment, the first projection 91a and the third projection 91c are positioned in the same manner with respect to the longitudinal direction, and the second projection 91b and the fourth projection 91d are positioned in the same manner with respect to the longitudinal direction. Consequently, the cross section of the sealing member 68 is shaped to be vertically symmetric and left-right symmetric.

In addition, the cross section of the sealing member 68 except the projections 91a to 91d is shaped to be substantially elliptical. That is, the cross section of the sealing member 68 according to the embodiment has a shape, in which the projections 91a to 91d are added to a part of an ellipse. However, the cross section of the sealing member 68 may be of course shaped to be other than substantially elliptical.

As shown in Fig. 10(a), according to the embodiment, a longitudinal length SL of the sealing member 68 is smaller than the groove depth L of the sealing groove 69. That is, in a state before the inner casing 53a and the outer casing 53b are joined together, the whole sealing member 68 is inserted into the sealing groove 69. The width SW of the sealing member 68 except the projections 91a to 91d is smaller than the groove width W of the sealing groove 69. Since the sealing member 68 is formed with first to fourth projections 91a to 91d, which contact with both sides 69a of the sealing groove 69, however, there is no fear that the sealing member 68 is inclined in the sealing groove 69, or positioned offset toward one side of the sealing groove 69. That is, the sealing member 68 is positioned in an appropriate position within the sealing groove 69 by the projections 91a to 91d.

In addition, an overall width SW (see Fig. 12) of the sealing member 68 including the first to fourth projections 91a to 91d is preferably equal to the groove width W of the sealing groove 69. However, as far as the sealing member 68 can be substantially prevented from being inclined in the sealing groove 69, the overall width SW' of the sealing member 68 may be smaller than the groove width W of the sealing groove 69. Also, since the sealing member 68 is formed from rubber, which is a kind of an elastic body, and can be easily deformed elastically, the overall width SW' of the sealing member 68 may be larger than the groove width W of the sealing groove 69 as far as the sealing member 68 can be inserted into the sealing groove 69.

When the inner casing 53a and the outer casing 53b are assembled together, the peripheral edge of the outer casing 53b is inserted into the sealing groove 69 of the inner casing 53a as shown in Fig. 10(b). In addition, according to the embodiment, the whole sealing member 68 is inserted into the sealing groove 69, so that the peripheral edge of the outer casing 53b can be easily inserted into the sealing groove 69.

As shown in Fig. 10(c), when the peripheral edge of the outer casing 53b is inserted into the sealing groove 69, the sealing member 68 is pushed by a tip end of the peripheral edge of the outer casing 53b to be compressed in a longitudinal direction. At this time, the sealing member 68 is expanded in a width direction but the recesses 90 are formed on sides of the sealing member 68 and the recesses 90 are not in contact with the sides 69a of the sealing groove 69. Therefore, when being deformed, the sealing member 68 is hard to be subjected to local side pressure by the sides 69a of the sealing groove 69. Accordingly, buckling is hard to generate. Also, since the projections 91a to 91d prevent the sealing member 68 from being inclined while being deformed, buckling of the sealing member 68 is inhibited by the projections 91a to 91d.

As described above, according to the embodiment, the sealing member 68 is flat in cross sectional shape, both one end side and the other end side thereof in a longitudinal direction are formed to be tapered, and the recesses 90 are formed on both sides thereof in the longitudinal direction. In this manner, since the sealing member 68 is flat in cross sectional shape, the sealing grooves 69 on the inner casing 53a and the outer casing 53b can be made thin, so that sealed portions of the casings 53a and 53b (peripheries of the sealing grooves 69) can be decreased in width. Also, since both one end side and the other end side of the cross section in the longitudinal direction are formed to be tapered, the both ends can be made small in contact area, so that it is possible to get a high sealing surface pressure.

Also, since the recesses 90 are formed on both sides of the cross section, expansion in a width direction (a direction perpendicular to the longitudinal direction) is inhibited when the sealing member 68 is subjected to a compression load in the longitudinal direction. Therefore, there is caused no problem even when both sides of the sealing member 68 contact partially with the sides 69a of the sealing groove 69. The recesses 90 of the sealing member 68 are provided on both sides thereof with the projections 91a to 91d, and the projections 91a to 91d contact with the sides 69a of the sealing groove 69.

Thereby, it is possible to arrange the sealing member 68 in an appropriate posture within the sealing groove 69, thus enabling positioning the sealing member 68 in an appropriate position. Also, since the recesses 90 are formed on both sides of the cross section of the sealing member 68, the sealing member 68 becomes hard to be subjected to side pressure offset in one direction by the sides 69a of the sealing groove 69 when being subjected to a compression load in the longitudinal direction. Accordingly, it is possible to inhibit buckling of the sealing member 68.

In particular, the sealing member 68 according to the embodiment is formed on one side thereof along the longitudinal direction with the first projection 91a and the second projection 91b, respectively, which are positioned on one side and the other side of a middle in the longitudinal direction, and is formed on the other side thereof along the longitudinal direction with the third projection 91c and the fourth projection 91d, respectively, which are positioned on one side and the other side of the middle in the longitudinal direction. Therefore, it is possible to arrange the sealing member 68 in a further appropriate posture and to suppress local side pressure from the sealing groove 69 further effectively. Accordingly, it is possible to further effectively inhibit buckling of the sealing member 68.

Also, with the sealing member 68 according to the embodiment, the first projection 91a and the third projection 91c, and the second projection 91b and the fourth projection 91d, respectively, are positioned in the same manner in the longitudinal direction. Therefore, the cross section of the sealing member 68 is shaped to be vertically symmetric and left-right symmetric. Thereby, positioning of the sealing member 68 becomes further easy and it is possible to suppress local side pressure from the sealing groove 69 further effectively. Accordingly, it becomes possible to further effectively inhibit buckling of the sealing member 68.

Also, the sealing member 68 according to the embodiment is formed in an endless manner and arranged circumferentially along the shape profile of the inner casing 53a. Therefore, it is possible to improve the transmission case 53 in sealing quality.

The sealing member according to the present teaching can be embodied in various configuration and is in no way limited to the embodiment. An explanation will be given below to further embodiments of a sealing member according to the present teaching.

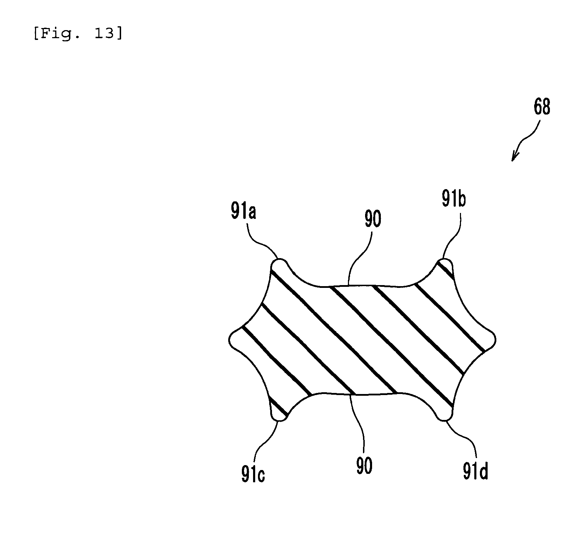

In the embodiment described above, both one end side and the other end side in the cross section of the sealing member 68 in the longitudinal direction are formed to be smoothly arcuate. As shown in Fig. 13, however, one end side and the other end side in a cross section of a sealing member 68 in a longitudinal direction may be shaped to be pointed in, for example, a substantially triangular configuration. The cross section of the sealing member 68 except projections 91a to 91d may be other than substantially elliptical.

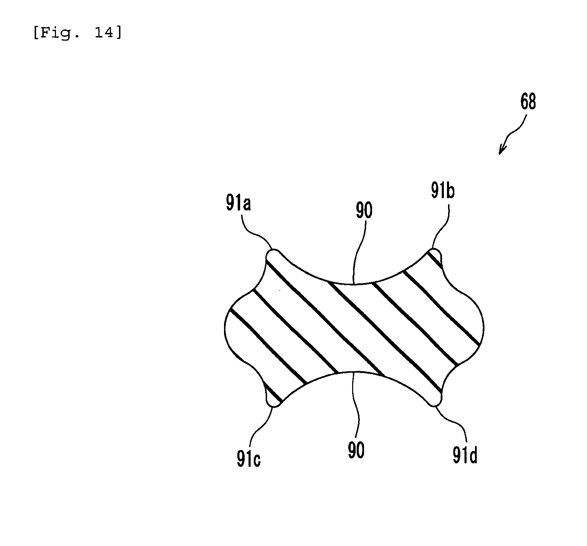

Also, according to the embodiment described above, in the cross section of the sealing member 68, the side between the first projection 91a and the second projection 91b and the side between the third projection 91c and the fourth projection 91d extend substantially in parallel to the longitudinal direction of the sealing member 68. The sealing member 68 has a cross sectional shape, in which the first to fourth projections 91a to 91d project laterally from the both substantially elliptical sides. However, a side between a first projection 91a and a second projection 91b and a side between a third projection 91c and a fourth projection 91d may not extend in parallel to a longitudinal direction but may be formed to be curvilinear as shown in, for example, Fig. 14.

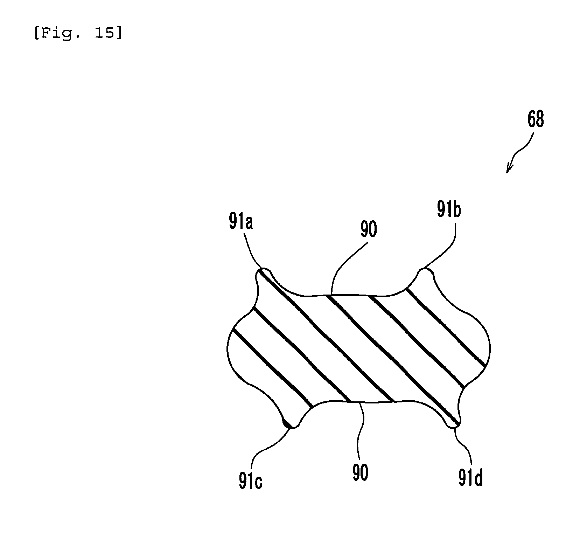

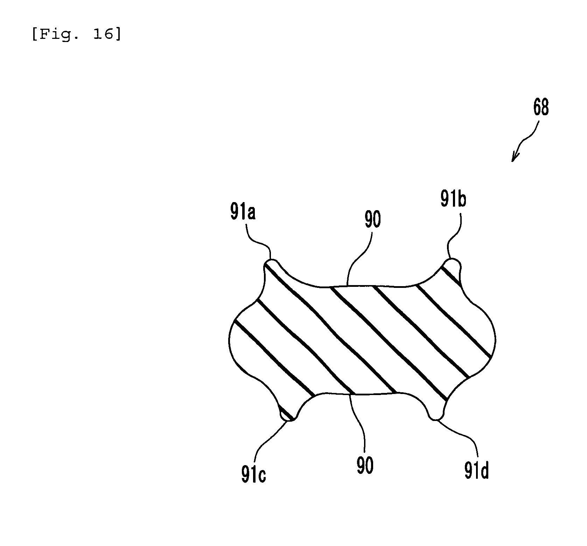

According to the embodiment described above, the first projection 91a and the third projection 91c, and the second projection 91b and the fourth projection 91d, respectively, are provided in positions aligned with respect to the longitudinal direction. However, a first projection 91a and a third projection 91c may be provided in different positions with respect to a longitudinal direction. Also, a second projection 91b and a fourth projection 91d may be provided in different positions with respect to the longitudinal direction. As shown in, for example, Fig. 15, a distance between a first projection 91a and a second projection 91b and a distance between a third projection 91c and a fourth projection 91d may be equal to each other, and the first projection 91a and the third projection 91c, and the second projection 91b and the fourth projection 91d, respectively, may get out of position in a longitudinal direction. Also, as shown in Fig. 16, a distance between a first projection 91a and a second projection 91b and a distance between a third projection 91c and a fourth projection 91d may be different from each other. For example, the third projection 91c may be provided toward a center in a longitudinal direction relative to the first projection 91a, and the fourth projection 91d may be provided toward the center in the longitudinal direction relative to the second projection 91b.

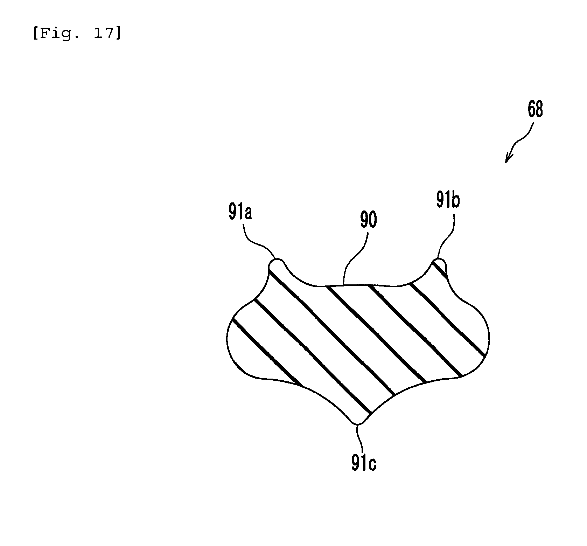

According to the embodiment described above, the number of projections in the cross section of the sealing member 68 is four. However, the number of projections may be three, or five or more. As shown in, for example, Fig. 17, a cross section of a sealing member 68 may be formed on one side along a longitudinal direction with a first projection 91a and a second projection 91b, which are positioned toward one end side and the other end side relative to a middle in the longitudinal direction, and on the other side along the longitudinal direction with a third projection 91c. The third projection 91c may be positioned intermediate between the first projection 91a and the second projection 91b in the longitudinal direction. Also, the third projection 91c may be positioned intermediate over the whole sealing member 68 in the longitudinal direction. Even in this case, the sealing member 68 can be positioned within a sealing groove 69 by the first to third projections 91a to 91c, and local side pressure from sides 69a of the sealing groove 69 can be suppressed. Accordingly, it becomes possible to inhibit buckling of the sealing member 68.

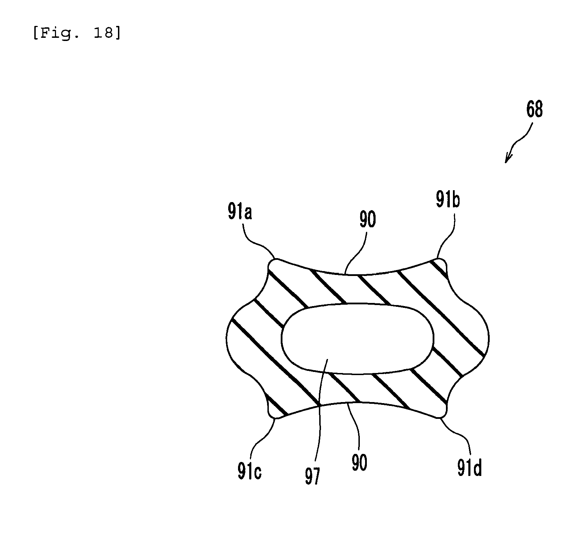

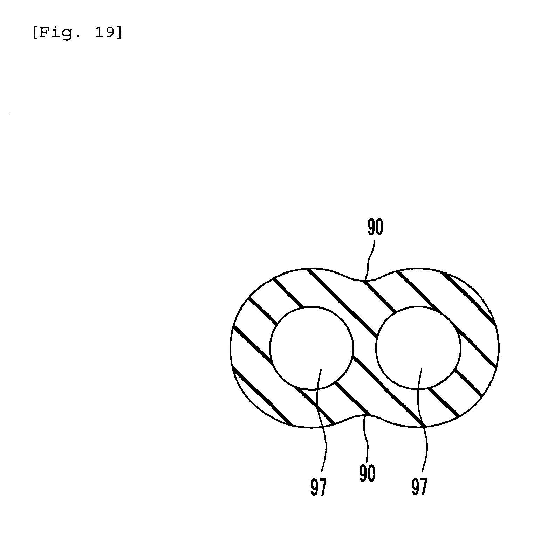

According to the embodiment described above, the sealing member 68 has a solid structure. However, a sealing member 68 may have a hollow structure. As shown in, for example, Fig. 18, a single cavity 97 may be formed centrally in a cross section of a sealing member 68. Also, as shown in Fig. 19, cavities 97, respectively, may be formed on one side and the other side of a cross section of a sealing member 68 in a longitudinal direction. In addition, the cavities 97 may be connected to, or disconnected from each other in a longitudinal direction of a sealing member 68 (front-back directions of planes in Figs. 18 and 19). In this manner, the cavities 97 are formed in the sealing member 68 whereby the sealing member 68 is liable to be deformed. Therefore, even in the case where local side pressure is applied from sides 69a of a sealing groove 69 by any chance, the sealing member 68 is minutely deformed in a manner to have the cavities 97 varied in shape and volume whereby such local side pressure is absorbed. Consequently, the whole sealing member 68 is inhibited from being subjected to local side pressure and bending of the sealing member 68 is suppressed. Accordingly, it is possible to inhibit buckling of the sealing member 68.

As described above, the present teaching is useful for a sealing member and a belt type continuously variable transmission provided with the same.

The description above discloses (amongst others), a sealing member according to an embodiment, which comprises a string-shaped sealing member to seal a belt chamber of a belt type continuously variable transmission, at least a part of a cross section thereof is flat, formed to be tapered on both one end side and the other end side thereof in a longitudinal direction, and formed on both sides thereof along the longitudinal direction with recesses.

A further sealing member according to the present teaching comprises a string-shaped sealing member to seal a belt chamber of a belt type continuously variable transmission, at least a part of a cross section thereof is flat, formed to be tapered on both one end side and the other end side thereof in a longitudinal direction, and formed on one side thereof along the longitudinal direction with two or more projections, and formed on the other side thereof along the longitudinal direction with one or more projections.

A further sealing member according to the present teaching comprises a string-shaped sealing member to seal a belt chamber of a belt type continuously variable transmission, at least a part of a cross section thereof is flat, formed to be tapered on both one end side and the other end side thereof in a longitudinal direction, formed on one side thereof along the longitudinal direction with first and second projections, respectively, which are positioned toward one end side and the other end side thereof relative to a middle in the longitudinal direction, and formed on the other side thereof along the longitudinal direction with third and fourth projections, respectively, which are positioned on one side and the other side thereof relative to the middle in the longitudinal direction.

A further sealing member according to the present teaching comprises a string-shaped sealing member to seal a belt chamber of a belt type continuously variable transmission, at least a part of a cross section thereof is flat, formed to be tapered on both one end side and the other end side thereof in a longitudinal direction, formed on one side thereof along the longitudinal direction with first and second projections, respectively, which are positioned toward one end side and the other end side thereof relative to a middle in the longitudinal direction, and formed on the other side thereof along the longitudinal direction with a third projection.

Since the sealing member according to the present teaching is formed to be flat in cross section, the sealing groove on the casing member can be made thin, and a sealed portion can be restricted to be small in width. Also, since the cross section is formed to be tapered on both one end side and the other end side thereof in a longitudinal direction, the both ends can be made small in contact area, so that it is possible to get a high sealing surface pressure.

Also, since the cross section is formed on both sides thereof with recesses, or laterally of the projections with recesses, the recesses become hard to bulge partially laterally when being subjected to a compression load in the longitudinal direction. Therefore, in a state before being subjected to a compression load, both sides of the recesses or the projections can be brought into contact with sides of the sealing groove. In this manner, both sides of the recesses or the projections are brought into contact with sides of the sealing groove whereby it becomes possible to position the sealing member in the sealing groove.

Also, since the cross section is formed on both sides thereof with recesses, or laterally of the projections with recesses, it is hard to be subjected to a local side pressure from the sides of the sealing groove when being subjected to a compression load in the longitudinal direction. Therefore, since a force tending to bend the sealing member is hard to generate, it is possible to prevent or suppress buckling of the sealing member.

As described above, it is possible according to the present teaching to provide a novel sealing member, by which a sealed portion of a casing member can be made small in width and buckling is made hard to generate.

The description further discloses, in order to provide a novel sealing member, by which a sealed portion of a casing member of a belt type continuously variable transmission can be made small in width and buckling is made hard to generate, an embodiment of a sealing member 68 which is a string-shaped sealing member that seals a belt chamber of a belt type continuously variable transmission, wherein the sealing member 68 is provided in a sealing groove 69 on an inner casing 53a of the belt type continuously variable transmission, a cross section of the sealing member 68 is flat and both one end side and the other end side thereof in a longitudinal direction are formed to be tapered, a first projection 91a and a second projection 91b, which are positioned on one side and the other side, respectively, are formed on one side of the sealing member 68 along the longitudinal direction, and a third projection 91c and a fourth projection 91d, which are positioned on one side and the other side, respectively, are formed on the other side of the sealing member 68 along the longitudinal direction, and recesses 90, respectively, are formed between the first projection 91a and the second projection 91b and between the third projection 91c and the fourth projection 91d.

Further, according to a first preferred aspect, there is disclosed a sealing member for belt type continuously variable transmissions, comprising a string-shaped sealing member to seal a belt chamber of a belt type continuously variable transmission, and wherein at least a part of a cross section thereof is flat, formed to be tapered on both one end side and the other end side thereof in a longitudinal direction, and formed on both sides thereof along the longitudinal direction with recesses.

Further, according to a second preferred aspect, the sealing member for belt type continuously variable transmissions may comprise a string-shaped sealing member to seal a belt chamber of a belt type continuously variable transmission, and wherein at least a part of a cross section thereof is flat, formed to be tapered on both one end side and the other end side thereof in a longitudinal direction, and formed on one side thereof along the longitudinal direction with two or more projections, and formed on the other side thereof along the longitudinal direction with one or more projections.

Further, according to a third preferred aspect, the sealing member for belt type continuously variable transmissions may comprise a string-shaped sealing member to seal a belt chamber of a belt type continuously variable transmission, and wherein at least a part of a cross section thereof is flat, formed to be tapered on both one end side and the other end side thereof in a longitudinal direction, formed on one side thereof along the longitudinal direction with first and second projections, respectively, which are positioned toward one end side and the other end side thereof relative to a middle in the longitudinal direction, and formed on the other side thereof along the longitudinal direction with third and fourth projections, respectively, which are positioned on one side and the other side thereof relative to the middle in the longitudinal direction.

Further, according to a fourth preferred aspect, the sealing member for belt type continuously variable transmissions may comprise a string-shaped sealing member to seal a belt chamber of a belt type continuously variable transmission, and wherein at least a part of a cross section thereof is flat, formed to be tapered on both one end side and the other end side thereof in a longitudinal direction, formed on one side thereof along the longitudinal direction with first and second projections, respectively, which are positioned toward one end side and the other end side thereof relative to a middle in the longitudinal direction, and formed on the other side thereof along the longitudinal direction with a third projection.

Further, according to a fifth preferred aspect, in the cross section, the first projection and the third projection are equal to each other in positioning in the longitudinal direction, and the second projection and the fourth projection are equal to each other in positioning in the longitudinal direction.

Further, according to a sixth preferred aspect, in the cross section, the third projection is positioned to be intermediate on the other side thereof in the longitudinal direction.

Further, according to a seventh preferred aspect, the sealing member for belt type continuously variable transmissions according to one of the first to fourth preferred aspects being formed therein with a cavity.

Further, according to an eighth preferred aspect, the sealing member for belt type continuously variable transmissions according to one of the first to fourth preferred aspects being formed to be endless.

Further, according to a ninth preferred aspect, there is disclosed a belt type continuously variable transmission comprising a sealing member according to one of the preferred first to eight aspects, and first and second casing members joined to each other to constitute at least a part of a belt chamber, and wherein the first and second casing members are formed with a sealing groove, and in a state, in which the first and second casing members are joined together, the whole sealing member is put in a state of being inserted into the sealing groove.

## Claims

1. Sealing structure for sealing components of a belt type continuously variable transmission comprising a sealing member (68) and sealing groove (69), the sealing member (68) being at least partially provided with a flat cross section, wherein a longitudinal length (SL) of the flat cross section of the sealing member (68) is smaller than a groove depth (L) of the sealing groove (69), such that in a state before the components to be sealed are joined together, the whole sealing member (68) is inserted into the sealing groove (69).

2. Sealing structure according to claim 1, wherein longitudinal end faces of the flat sealing member (68) are formed to be tapered.

3. Sealing structure according to claim 1 or 2, wherein at least one longitudinal side face of the sealing member (68) is provided with a recess and/or with two or more projections.

4. Sealing structure according to one of the claims 1 to 3, wherein the sealing member is string-shaped.

5. Sealing structure according to one of the claims 1 to 3, wherein, in a state in which the components to be sealed have been joined together, the sealing member substantially completely fills in a space of the sealing groove remaining between the joined components.

6. Sealing structure according to one of the claims 1 to 5, comprising the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on both longitudinal sides thereof with recesses.

7. Sealing structure according to one of the claims 1 to 5, comprising the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on one longitudinal side thereof with two or more projections, and formed on the other longitudinal side thereof with one or more projections.

8. Sealing structure according to one of the claims 1 to 5, comprising the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on one longitudinal side thereof with first and second projections, respectively, which are positioned toward one end face and the other end face thereof relative to a middle in the longitudinal direction, and is formed on the other longitudinal side thereof with third and fourth projections, respectively, which are positioned on one end face and the other end face thereof relative to the middle in the longitudinal direction.

9. Sealing structure according to one of the claims 1 to 5, comprising the string-shaped sealing member to seal a belt chamber of a belt type continuously variable transmission, wherein at least a part of the cross section of the sealing member is flat, and wherein the sealing member is formed to be tapered on both end faces thereof in a longitudinal direction, and is formed on one longitudinal side thereof with first and second projections, respectively, which are positioned toward one end face and the other end face thereof relative to a middle in the longitudinal direction, and is formed on the other longitudinal side thereof with a third projection.

10. Sealing structure according to claim 8, wherein in the cross section, the first projection and the third projection are equal to each other in positioning in the longitudinal direction, and the second projection and the fourth projection are equal to each other in positioning in the longitudinal direction.

11. Sealing structure according to claim 9, wherein in the cross section, the third projection is positioned to be intermediate on the other side thereof in the longitudinal direction.

12. Sealing structure according to one of the claims 1 to 11, the sealing member being formed therein with a cavity.

13. Sealing structure according to one of the claims 1 to 12, the sealing member being formed to be endless.

14. Belt type continuously variable transmission comprising a sealing structure with a sealing member according to one of the claims 1 to 13, and first and second casing members joined to each other to constitute at least a part of a belt chamber, and wherein the first and second casing members are formed with the sealing groove, and in a state, in which the first and second casing members are joined together, the whole sealing member is put in a state of being inserted into the sealing groove.
